## Europäisches Patentamt

## European Patent Office

## Office européen des brevets

(19)

(11) Publication number: **0 116 600 B1**

(12)

# EUROPEAN PATENT SPECIFICATION
## published in accordance with Art. 158(3) EPC

(45) Date of publication of patent specification: **10.04.91**

(51) Int. Cl.⁵: **G06F 9/00, G06F 3/00**

(21) Application number: **83902713.3**

(22) Date of filing: **22.07.83**

(86) International application number:
**PCT/US83/01129**

(87) International publication number:
**WO 84/00833 (01.03.84 84/06)**

Divisional application 90118649.4 filed on 22/07/83.

(54) **PRE-EXECUTION NEXT ADDRESS CALCULATING MECHANISM.**

(30) Priority: **23.08.82 US 410430**

(43) Date of publication of application:
**29.08.84 Bulletin 84/35**

(45) Publication of the grant of the patent:
**10.04.91 Bulletin 91/15**

(84) Designated Contracting States:
**DE FR NL**

(56) References cited:
| | |
|---|---|
| GB-A- 986 791 | US-A- 3 900 835 |
| US-A- 3 961 313 | US-A- 4 040 030 |
| US-A- 4 298 927 | US-A- 4 323 967 |
| US-A- 4 371 928 | |

(73) Proprietor: **Western Electric Company, Incorporated**
**222 Broadway**
**New York, NY 10038(US)**

(72) Inventor: **DITZEL, David, Roger**
**105 Mountain Boulevard**
**Watchung, NJ 07060(US)**
Inventor: **McLELLAN, Jr., Hubert, Rae**
**4201 Summit Drive**
**Marietta, GA 30067(US)**

(74) Representative: **Weitzel, David Stanley et al**
**AT&T (UK) LTD. AT&T Intellectual Property Division 5 Mornington Road**
**Woodford Green, Essex IG8 OTU(GB)**

## Description

This invention relates to computers for reducing the execution time required for branch instructions.

Digital computers retrieve instructions and data from a memory device and execute the instructions in accordance with a program stored therein. The computer's repertoire of instructions comprises operational instructions, control type instructions or some combination thereof. Operational instructions perform some direct arithmetic or logical function. Control instructions direct the order of execution of instructions. Computer instructions are normally executed sequentially, as they are found in the computer's memory. Control instructions alter this otherwise sequential flow of control.

Instructions may be of variable size, that is, of variable length. The address of the next instruction to be executed is usually computed by adding the length of the current instruction to its address. The address of the instruction currently being executed is kept in a machine register, usually known as the program counter. A control instruction, that is, a branch or jump instruction, sets the program counter to a specified value. This value is the operand of the control instruction.

Branch instructions occur frequently in programs. In many programs, more than one-third of all instructions executed are branches. There are two types of branch instructions: unconditional and conditional. Unconditional branches always alter the flow of control by specifying in its operand the address of the next instruction. Conditional branches, on the other hand, alter the flow of control only when some specified condition is met. If the condition Is not met, control Is transferred to the next sequentially addressed instruction as if the branch had no effect. It is desirable to reduce execution time for branch instructions.

US-A-4298927 seeks to solve the problem of the waste of processor time that occurs while the processor accesses the memory, which operates relatively slowly, to read out the next instruction. The solution proposed is a prefetch circuit into which a plurality of instructions are read from the memory during processor idle periods. However the problem of reducing the execution time for branch instructions is not dealt with.

GB-A-986791 discloses the ability to perform delayed conditional operations, i.e., the selection of a location in program memory which depends on the result of an operation separated from the selection by a large number of operations. The address of a next instruction to be executed is stored in main memory as part of the content of every instruction. When an instruction is read, this address of the next instruction is stored in a selection register. In nonconditional operation, the contents of the selection register determines the address of the next instruction to be read from memory. In conditional operation, the address in the selection register is changed by address modification means under control of a generated signal.

According to this invention there is provided a computer as claimed in claim 1.

In an embodiment of the invention the time required for executing branch instructions is significantly reduced by dynamically adding a next address field to instructions in an address pre-fetch unit after the instructions are fetched from memory but before they are transferred via an instruction cache to an execution unit. By adding the next address field to instructions before they are transferred to the instruction cache, the need for calculating the next instruction address after every transferral of an Instruction from the instruction cache to the execution unit is eliminated.

Furthermore, the use of a next address field permits the elimination of branch instructions by Including the target of a branch instruction as the next address field of the sequentially previous instruction, thereby making a separate transfer instruction unnecessary. This has the effect of speeding up the machine as if branch instructions were executed infinitely fast.

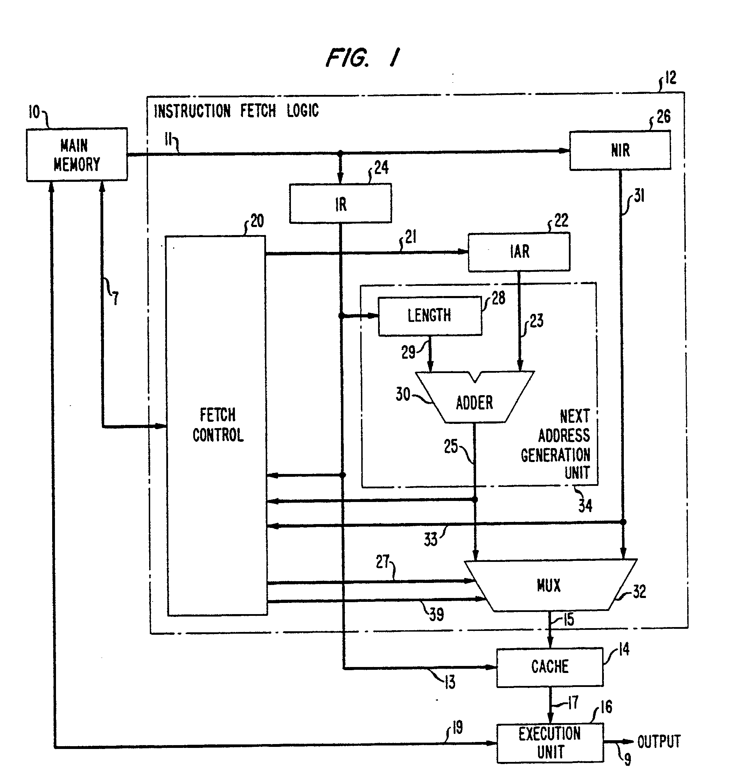

The invention will now be described by way of example with reference to the accompanying drawing in which FIG. 1 is a block diagram revealing relevant parts of a general purpose digital computer organized to take advantage of the present invention.

Referring to FIG. 1, there is shown a block diagram of a general purpose digital computer which is useful in realizing the advantages of the present invention. The digital computer of FIG. 1 comprises a main memory 10 which can be used to store both data and Instructions. Instructions are fetched from memory 10 by the instruction fetch logic circuit 12 and stored in an instruction cache memory 14. In accordance with the present invention, to be described bore fully hereinbelow, instruction fetch logic circuit 12 also generates a next instruction address and transfers the next instruction address to cache 14 over bus 15.

Cache 14 comprises a traditional computer memory cache, that is, a high speed buffer. Cache 14 is modified to provide extra storage space for the next instruction address. Instructions to be executed are transferred from cache 14 over bus 17 to execution unit 16. Data operands for instructions being executed are then transferred from main memory 10 over bus 19 to execution unit 16. Main memory 10, execution unit 16, and cache 14 operate in a traditional fashion and may be implemented in any one of several ways commonly employed by those skilled in the art. The output from execution unit 16 is transferred over bus 19, to main memory 10 or over bus 9 to a utilization means (not shown).

Referring, more particularly, to the instruction fetch logic circuit 12, there is shown an instruction address register (IAR) 22, known generally as a program counter. The instruction address register 22 holds the address of the instruction to be fetched. Under the direction of the fetch control logic circuit 20, which may be a finite state machine or which may comprise conventional combinational logic, an instruction is fetched from main memory 10 over bus 11 and placed in instruction register (IR) 24.

The sequentially following instruction is also fetched from main memory 10 and placed in the next instruction register (NIR) 26. If the instruction in the next instruction register 26 is not a branch instruction, the next instruction address is computed by adding the length of the instruction in the instruction register 24 to the contents of the instruction address register 22.

The length of the instruction in the instruction register 24 is determined by the length unit 28 which comprises either a read only memory or a combinational logic circuit. The next instruction address is computed in adder 30 by adding the value of the length on bus 29 from the length unit 28 and the value of the current address on bus 23 from the instruction address register 22. The output from adder 30, appearing on bus 25, is then gated through multiplexor 32, in response to an enabling signal on lead 27, onto bus 15. Simultaneously therewith, the instruction in instruction register 24 is transferred via bus 13 to instruction cache 14. Thus, the instruction in instruction cache 14 comprises the instruction from instruction register 24 and the address of the next instruction, placed in a next address field adjacent thereto, from adder 30.

In the situation where the instruction stored in the next instruction register 26 is a branch, however, the contents of the next address field therein are taken to be the target of the instruction stored in the next instruction register 26. The contents of the next instruction register 26 are transferred to instruction cache 14. This transfer is achieved by enabling lead 39 thereby causing multiplexor 32 to gate bus 31 to bus 15. Simultaneously therewith, the contents of instruction register 24 is transferred over bus 13 to instruction cache 14.

Thus, instruction cache 14 comprises an instruction and the address of the next instruction adjacent thereto. Because the next instruction register 26 holds a branch instruction, and because the contents thereof are transferred to instruction cache 14 and placed in the next address field, adjacent to the instruction therein, the next address field comprises the target of the branch address. By this means, the execution time required for a branch instruction is eliminated.

The present invention can be understood more clearly by referring to the following set of instructions:

| Instruction No. | Instruction |
|---|---|
| 1 | MOV A,B |
| 2 | ADD C,D |
| 3 | JMP 37. |

Initially, the address 1 is entered in the instruction address register 22. Thereafter, instruction 1, namely, "MOV A,B" is retrieved from main memory 10 and entered in instruction register 24. The next sequential instruction, namely, "ADD C,D" is retrieved from main memory 10 and entered in the next instruction register 26. Because the instruction entered in register 26 is not a branch, the address of the next sequential instruction, namely 2, is computed by adding the length of the current instruction in register 22. Thereafter, the instruction in register 24 and the address of the next instruction from adder 30 are simultaneously transferred to instruction cache 14 as stated hereinabove. The instruction entered in cache 14 appears as follows:

| Instruction | Next Address Field |
|---|---|
| MOV A,B | 2. |

Subsequently, the instruction address 2 is entered in register 22. The instruction 2, namely "ADD C,D," is retrieved from main memory 10 and entered in register 24. The next sequential instruction 3, namely "JMP 37" is retrieved from main memory 10 and entered in register 26. Because next instruction register 26 holds a branch instruction, the target of the branch namely "37" is transferred to instruction cache 14, along with the instruction from register 24. Thus, the instruction in cache 14 appears as follows:

| Instruction | Next Address Field |
| --- | --- |
| ADD C,D | 37. |

By this means, the execution time needed for retrieving the instruction 3, namely "JMP 37," from instruction cache 14 and associated time used by execution unit 16 is eliminated.

## Claims

1. A computer for reducing the execution time required for branch instructions, comprising a main memory (10), an instruction fetch unit (12) for fetching instructions from the main memory and comprising first means (22) for storing the address of a first instruction from the main memory, second means (24) for storing the first instruction from the main memory, and third means (26) for storing a second instruction sequentially following the first instruction in the main memory, and characterized by a cache (14) for storing the instructions from the fetch unit, an execution unit (16) for executing the instructions stored in the cache, and means (20, 32) for simultaneously transferring the first instruction and the address field of the second instruction to the cache when the second instruction is a branch instruction.

2. A computer as claimed in claim 1 comprising generating means (34), responsive to the contents of the first, second and third means, for generating for transfer to the cache the address of the next sequential instruction in the main memory following the first instruction when the second instruction is a nonbranch instruction.

3. A computer as claimed in claim 2 wherein the generating means comprises means (28) for computing the length of the instruction in the second means, and means (30) for adding the instruction length to the first instruction address to generate the next instruction address for transfer to the cache.

## Revendications

1. Un ordinateur conçu pour réduire le temps d'exécution nécessaire pour des instructions de branchement, comprenant une mémoire centrale (10), une unité d'extraction d'instruction (12) qui est destinée à extraire des instructions de la mémoire centrale et qui comprend des premiers moyens (22) pour enregistrer l'adresse d'une première instruction provenant de la mémoire centrale, des seconds moyens (24) pour enregistrer la première instruction provenant de la mémoire centrale, et des troisièmes moyens pour enregistrer une seconde instruction qui suit séquentiellement la première instruction dans la mémoire centrale, et caractérisé par une antémémoire (14) qui est destinée à enregistrer les instructions provenant de l'unité d'extraction, une unité d'exécution (16) qui est destinée à exécuter les instructions qui sont enregistrées dans l'antémémoire, et des moyens (20, 32) pour transférer simultanément la première instruction et le champ d'adresse de la seconde instruction vers l'antémémoire, lorsque la seconde instruction est une instruction de branchement.

2. Un ordinateur selon la revendication I, comprenant des moyens de génération (34), qui fonctionnent sous la dépendance du contenu des premiers, seconds et troisièmes moyens, pour générer pour le transfert vers l'antémémoire, l'adresse de l'instruction séquentielle suivante dans la mémoire centrale, se trouvant à la suite de la première instruction, lorsque la seconde instruction n'est pas une instruction de branchement.

3. Un ordinateur selon la revendication 2, dans lequel les moyens de génération comprennent des moyens (28) qui sont destinés à calculer la longueur de l'instruction présente dans les seconds moyens, et des moyens (30) qui sont destinés à additionner la longueur d'instruction à l'adresse de la première instruction, pour générer l'adresse d'instruction suivante, pour le transfert vers l'antémémoire.

**Ansprüche**

1. Rechner zur Verringerung der für Verzweigungsbefehle erforderlichen Ausführungszeit mit einem Hauptspeicher (10) und einer Befehlsholeinheit (12) zum Holen von Befehlen aus dem Hauptspeicher, die eine erste Einrichtung (22) zur Speicherung der Adresse eines ersten Befehls aus dem Hauptspeicher, eine zweite Einrichtung (24) zur Speicherung des ersten Befehls aus dem Hauptspeicher und eine dritte Einheit (26) zur Speicherung eines zweiten Befehls aufweist, der dem ersten Befehl im Hauptspeicher sequentiell folgt,
gekennzeichnet durch
einen Cache-Speicher (14) zur Speicherung des Befehls aus der Holeinheit
eine Ausführungseinheit (16) zur Ausführung des Befehls im Cache-Speicher und
eine Einrichtung (20, 32) zur gleichzeitigen Übertragung des ersten Befehls und des Adressenfeldes des zweiten Befehls zum Cache-Speicher, wenn der zweite Befehl ein Verzweigungsbefehl ist.

2. Rechner nach Anspruch 1 mit einer Generatoreinrichtung (34), die unter Ansprechen auf den Inhalt der ersten, zweiten und dritten Einrichtung für eine Übertragung zum Cache-Speicher die Adresse des im ersten Befehl nächstfolgenden Befehls im Hauptspeicher erzeugt, wenn der zweite Befehl kein Verzweigungsbefehl ist.

3. Rechner nach Anspruch 2, bei dem die Generatoreinrichtung eine Einrichtung (28) zur Berechnung der Länge des Befehls in der zweiten Einrichtung und eine Einrichtung (30) umfaßt, die die Befehlslänge zur Adresse des ersten Befehls addiert, um die Adresse des nächsten Befehls für die Übertragung zum Cache-Speicher zu erzeugen.

5

*FIG. 1*